# EUROPÄISCHE PATENTSCHRIFT

(11) **EP 2 669 389 B1**
(45) Veröffentlichungstag und Bekanntmachung des Hinweises auf die Patenterteilung: **16.07.2014**
(21) Anmeldenummer: 13002062.1
(22) Anmeldetag: 19.04.2013
(51) Int. Cl.: F01K 9/00, F01K 13/00, F01K 25/08, F22B 1/18, C21D 9/46, C21D 9/56, C21D 9/67, C21D 1/84, F27B 11/00, F27D 7/02, F27D 9/00, F27D 17/00, F01K 25/00

(54) **Verfahren und Anordnung zur Rückgewinnung von Wärmeenergie bei der Wärmebehandlung von kaltgewalztem Stahlband in einem Haubenglühofen**
Method and assembly for recovering data thermal energy in the heat treatment of cold rolled steel strips in a hood type annealing furnace
Procédé et agencement pour récupérer de l'énergie thermique lors du traitement thermique d'une bande d'acier enroulée à froid dans un four de recuit à cloche

(30) Priorität: 29.05.2012 DE 102012010382
(43) Veröffentlichungstag der Anmeldung: 04.12.2013
(73) Patentinhaber: Bilstein GmbH & Co. KG, 58119 Hagen (DE)
(72) Erfinder: Zwickel, Gerald, 35216 Biedenkopf (DE)
(74) Vertreter: Kesselhut, Wolf

(56) Entgegenhaltungen:
- WO-A2-2010/089056
- DE-A1-102012 009 854
- SU-A1- 1 740 459

## Beschreibung

Die Erfindung betrifft ein Verfahren und eine Anordnung zur Rückgewinnung von Wärmeenergie bei der Wärmebehandlung von kaltgewalztem Stahlband in einem Haubenglühofen gemäß dem Oberbegriff von Anspruch 1.

Bei der Herstellung von kaltgewalztem Stahlband, das in Fachkreisen auch als "Kaltband" bezeichnet wird, wird ein zuvor durch Walzen oberhalb der Rekristallisationstemperatur des Stahls erzeugtes Warmband durch einen oder mehrere weitere Kaltwalzvorgänge bei Temperaturen unterhalb der Rekristallisationstemperatur auf eine Dicke von weniger als 3,0 mm heruntergewalzt, wodurch sich Feinblech in einem Dickenbereich von 3 mm bis 0,5 mm oder gar weniger erzeugen lässt. Aufgrund der beim Kaltwalzvorgang erfolgenden Streckung des Metallgefüges in der Verformungsrichtung steigt dabei die Festigkeit des Werkstoffs an, wohingegen seine Verformbarkeit aufgrund der entstehenden Kaltverfestigung gleichzeitig abnimmt. Durch die Kaltverfestigung ist das Kaltband für eine direkte Weiterverarbeitung zu spröde und wird aus diesem Grunde im Anschluss an den Kaltwalzprozess oftmals rekristallisierend geglüht, um hierdurch die Umformbarkeit des Werkstoffs wieder herzustellen. Beim Rekristallisationsglühen handelt es sich um eine Wärmebehandlung des Kaltbandes, welche darin besteht, dass der Werkstoff auf eine definierte Temperatur oberhalb der Rekristallisationstemperatur von in etwa 750 Grad Celsius erwärmt, das Temperaturniveau für eine vorgegebene Zeitdauer von mehreren Stunden gehalten und der Werkstoff anschließend in definierter Weise entsprechend einem vorgegebenen Temperaturverlauf abgekühlt wird.

Der Prozess, der hierfür bevorzugt in der Praxis eingesetzt wird, ist das sogenannte Haubenglühen, bei welchem das Kaltband zu einem Coil aufgerollt wird, und mehrere dieser Coils übereinander unter einer geschlossenen, insbesondere durch Gasbrenner erwärmten Heizhaube bei Temperaturen zwischen 500 Grad und 800 Grad Celsius in einer Schutzgasatmosphäre aus H₂ oder NHₓ geglüht werden, um die aufwändig erzeugte blanke und glatte Oberfläche des Kaltbandes nicht zu zerstören. Nach Ablauf der vorgegebenen Glühdauer wird die Glühhaube mit einer Kühlhaube vertauscht, um die Coils im Anschluss daran in einer Schutzgasatmosphäre kontrolliert abzukühlen. Das Abkühlen der Coils erfolgt hierbei bekanntermaßen in zwei unterschiedlichen Phasen, von denen die erste Kühlphase als Langsamkühlung bezeichnet wird, bei der die Temperatur des Schutzgases über einen Zeitraum von beispielsweise 7 Stunden hinweg von 700 Grad Celsius auf ca. 400 °C herunter verringert wird. An diese erste Langsamkühlphase schließt sich eine zweite, als Schnellkühlung bezeichnete Abkühlphase an, in der die Temperatur des Schutzgases über eine Zeitdauer von beispielsweise 7 Stunden von 400 °C auf ca. 60 bis 80 °C abgesenkt wird.

Ein zuvor beschriebener Haubenglühofen ist beispielsweise aus der DE 1 186 888 A1 bekannt, wobei das Schutzgas zur Rückgewinnung eines Teils der Wärmeenergie, welche in diesem enthalten ist, aus dem hermetisch abgeschlossenen Innenraum der Glühhaube heraus über einen Wärmetauscher geleitet wird, durch den hindurch ebenfalls das zugeführte kühle Schutzgas zur Vorwärmung desselben geleitet wird, bevor dieses in den hermetisch abgedichteten Innenraum unterhalb der Schutzhaube eingeleitet wird. Hierdurch wird ein Teil der Wärmeenergie des erhitzten Schutzgases während der Erwärmungsphasen und während des Haltens der Temperatur über eine vorgegebene Zeitdauer hinweg zur Vorerwärmung eingesetzt. Die Schrift gibt jedoch keinen Hinweis darauf, die im Coil gespeicherte Wärmeenergie auch während der Abkühlungsphasen zu nutzen.

Einen Haubenglühofen mit zwei Oberräumen die mittels Wärmetauscher die Zugeführte Energie wederverwenden offenbart die WO 2010/089056.

Bei den bekannten Haubenglühöfen, wie sie beispielsweise in der Vergangenheit in größerer Zahl von der Anmelderin betrieben wurden, ist es in diesem Zusammenhang allgemein üblich, die Wärme aus den Coils während der Abkühlphasen lediglich zum Beheizen der Hallen, in welchen sich die Haubenglühöfen befinden, einzusetzen, bzw. die Wärme aus den Wärmetauschern über Kühlwasser oder aber eine Luftkühlung ungenutzt abzuführen, da der logistische Aufwand, der z.B. mit dem direkten Einleiten des Schutzgases aus einem Haubenglühofen während der Abkühlungsphasen in einen anderen Haubenglühofen währen der Aufheizphase verbunden ist, sehr groß ist und sich in Anbetracht der hierbei rückgewinnbaren Wärmeenergiemenge und der exponetiellen Zunahme der Zeitdauer bei geringen Temperaturdifferenzen wirtschaftlich nicht lohnt.

Demgemäß ist es eine Aufgabe der vorliegenden Erfindung, ein Verfahren und eine Anordnung zur Rückgewinnung von Wärmeenergie beim Haubenglühen von kaltgewalztem Stahlband in einem Haubenglühofen zu schaffen, welches einen gegenüber den bekannten Verfahren erhöhten thermischen Wirkungsgrad besitzt. Diese Aufgabe wird erfindungsgemäß durch die Merkmale von Anspruch 1 und 9 gelöst.

Weitere Merkmale der Erfindung sind in den Unteransprüchen beschrieben.

Gemäß der Erfindung wird bei einem Verfahren zur Rückgewinnung von Wärmeenergie bei der thermischen Behandlung von kaltgewalztem Stahlband in einem Haubenglühofen das Stahlband in einer Schutzgasatmosphähre, insbesondere in einer Wasserstoffatmosphäre, bis auf eine Temperatur oberhalb der Rekristallisationstemperatur erwärmt, die von der Art des behandelten Kaltbandes abhängt und im Bereich von ca. 700 °C bis 750 °C liegt. Nach dem Erwärmen des Kaltbandes im Haubenglühofen und Halten der Temperatur über eine vorgegebene Zeitdauer wird das Kaltband anschließend wieder abgekühlt, wozu das Schutzgas, welches durch den Innenraum des Haubenglühofens zirkuliert wird und das Kaltband umströmt, während einer aus historischen Gründen als Langsamkühlphase bezeichneten Kühlphase über eine Zeitdauer von z.B. 7 bis 15 Stunden hinweg in einem ersten Wärmetauscher gekühlt wird. Die Temperatur des Schutzgases wird während dieser Langsamkühlphase sukzessive entsprechend einem vorgegebenen Temperaturverlauf bis auf eine Zwischentemperatur im Bereich von insbesondere 400°C reduziert.

In einer sich anschließenden zweiten Phase, die aus historischen Gründen als Schnellkühlphase bezeichnet wird, wird die Temperatur des Schutzgases dann sukzessive von der Zwischentemperatur bis auf eine Endtemperatur verringert, die üblicher Weise weniger als 80°C beträgt.

Die Erfindung zeichnet sich dadurch aus, dass der erste Wärmetauscher vom Schutzgas ausschließlich in der ersten Langsamkühlphase durchströmt wird und dabei die Wärmeenergie des Schutzgases über einen geschlossenen Ölkreislauf und einen zweiten Wärmetauscher auf ein Arbeitsmedium übertragen wird. Das Arbeitsmedium besitzt - bezogen auf Normaldruck - eine Siedetemperatur von weniger als 80°C, insbesondere weniger als 70°C und verdampft im zweiten Wärmetauscher. Der Dampf wird anschließend einem Dampfmotor zugeführt, der einen Teil der im Arbeitsmedium enthaltenen Wärmeenergie in elektrische und/oder mechanische Energie überführt, indem er z.B. einen elektrischen Generator antreibt oder sonstige mechanische Arbeit verrichtet. Dampfmotoren sind aus dem Stand der Technik bekannt und werden allgemein auch als Expansionmotoren bezeichnet. Sie arbeiten nach dem Prinzip einer Dampfmaschine mit einem oder mehreren Zylindern, wobei anstelle von Wasserdampf als Arbeitsmedium in der Regel eine organische Substanz wie z.B. Ethanol eingesetzt wird, welche gegenüber Wasser bei Normaldruck einen geringeren Siedepunkt aufweist.

Die Erfindung zeichnet sich weiterhin dadurch aus, dass ein weiterer Wärmetauscher vorgesehen ist, der ausschließlich in der zweiten Schnellkühlphase vom Schutzgas durchströmt wird. In diesem weiteren Wärmetauscher wird die im Schutzgas enthaltene Wärmeenergie ausschließlich während der Schnellkühlphase zur Erwärmung von Brauchwasser oder Heizwasser auf ein Wärmetransportmedium übertragen, welches bevorzugt Wasser ist.

Die Erfindung besitzt den Vorteil, dass die im Schutzgas nach der Erwärmung des Kaltbandes enthaltene Energie zu einem Großteil in Form von mechanischer, bzw. elektrischer Arbeit sowie auch zur Erwärmung von Wasser, z.B. zu Heizzwecken, erneut genutzt werden kann. Durch die Kombination aus einer Übertragung der Wärmeenergie vom anfänglich mehr als 700 °C heißen Schutzgas über das erfindungsgemäß verwendete Öl, dessen Temperatur bevorzugt im Wesentlichen konstant im Bereich von 260 °C gehalten wird, und der Kühlung des Öls durch das Arbeitsmedium, welches bereits bei weniger als 80°C verdampft, kann hierbei der Arbeitspunkt der eingesetzten Wärmetauscher optimiert werden. In gleicher Weise wird durch den Einsatz eines Dampfmotors, der gegenüber einer Dampfturbine eine erheblich feinfühligere Regelung der dem Arbeitsmedium entzogenen Wärmeenergie erlaubt, eine praxisgemäße Regelung der Temperatur des Schutzgases innerhalb der ersten Langsamkühlphase überhaupt erst möglich.

Anders ausgedrückt lässt sich durch eine Vergrößerung oder Verkleinerung der elektrischen und/oder mechanischen Last am Dampfmotor die von diesem aufgenommene Wärmemenge pro Zeiteinheit vergleichsweise schnell verändern, wodurch die Temperatur des Arbeitsmediums ebenfalls innerhalb eines vergleichsweise kurzen Zeitraums von z.B. 30 Sekunden, auf den vorgegebenen Sollwert von z.B. 260 °C erhöht oder verringert werden kann. Durch diese vergleichsweise schnelle Regelung der Temperatur des Arbeitsmediums auf einen vorgegebenen Sollwert lässt sich wiederum über die Veränderung der Durchflussmenge die Temperatur des anfänglich mehr als 700 °C heißen Schutzgases auf einen gewünschten Sollwert einstellen, wodurch sichergestellt wird, dass die Temperatur des vom Schutzgas beaufschlagten Kaltbandes innerhalb des Glühofens während der Langsamkühlphase entsprechend dem vorgegebenen Temperaturprofil verringert wird.

Bei der bevorzugten Ausführungsform der Erfindung enthält der Ölkreislauf Thermoöl insbesondere auf Mineralölbasis, welches bekanntermaßen zur Kühlung und zur Beheizung von industriellen Anlagen und Prozessen in geschlossenen Kreisläufen eingesetzt wird, und welches im vorliegenden Falle bei Normaldruck bis zu einer Temperatur von ca. 320 °C flüssig und im Wesentlichen beständig ist. Das Thermoöl wird dabei im ersten Wärmetauscher durch das Schutzgas auf eine Temperatur im Bereich von vorzugsweise 265°C erhitzt und im zweiten Wärmetauscher durch das Arbeitsmedium auf eine Temperatur im Bereich von bevorzugt 180°C abgekühlt, wodurch sich sowohl zu Anfang der Langsamkühlphase bei einer Temperatur des Schutzgases im Bereich von 700 °C, als auch zum Ende der Langsamkühlphase hin, wenn die Temperatur des Schutzgases lediglich noch etwas mehr als 400 °C beträgt, ein wirkungsvoller Wärmetransport über das Thermoöl und eine zuverlässige Regelung der Temperatur des Schutzgases über die Durchflussmenge an Thermoöl gewährleistet werden, ohne dass dieses chemisch zersetzt wird oder gar verdampft. Ein weitere Vorteil von Öl als Wärmetransportmedium ist darin zu sehen, dass dieses auch in großen Mengen vergleichsweise kostengünstig verfügbar ist und im Gegensatz zu Wasser lediglich geringe Betriebsdrücke im Bereich von wenigen Bar im Ölkreislauf erfordert.

Nach einem weiteren der Erfindung zugrunde liegenden Gedanken ist das Arbeitsmedium eine organische Flüssigkeit, insbesondere Ethanol, welche im zweiten Wärmetauscher verdampft wird. Die organische Flüssigkeit wird dem Dampfmotor in diesem Falle als Ethanoldampf mit einem Überdruck im Bereich von 10 bis 50 bar, bevorzugt ca. 35 bar und einer Temperatur von ca. 250°C zugeführt, der im Dampfmotor auf einen Kolben wirkt, sich unter Leistung von mechanischer Arbeit entspannt und anschließend mit einem geringeren Druck aus dem Dampfmotor in einen Kondensator austritt. Im Kondensator erfolgt eine weitere Kühlung des Dampfes, die zu einer Kondensation desselben führt, wobei die angesammelte Menge an flüssigem Arbeitsmedium über eine nachgeschaltete Pumpe wiederum zum zweiten Wärmetauscher gefördert wird, in welchem das verflüssigte Arbeitsmedium erneut erwärmt und verdampft wird. Durch die Kondensation des Arbeitsmittel-Dampfes im Kondensator ergibt sich der Vorteil, dass auch die Kondensationswärme des Arbeitsmediums mit genutzt wird, wodurch sich der Temperaturbereich, welcher für die Aufnahme der Wärmeenergie im zweiten Wärmetauscher zur Verfügung steht, noch einmal in vorteilhafter Weise vergrößert und dementsprechend die Regelbarkeit der Temperatur des Öls über die Durchflussmenge verbessert wird.

Das Kühlen des Kondensators erfolgt bei der bevorzugten Ausführungsform der Erfindung durch ein drittes Wärmetransportmedium, bei welchem es sich insbesondere um Wasser handelt, das die dem Arbeitsmedium im Kondensator entzogene Restwärme zur Erwärmung/Vorwärmung von Brauchwasser oder auch zu Heizzwecken einem Heißwasserspeicher oder einer Heizeinrichtung zuführt, welche ggf. wiederum einen Wärmetauscher enthalten können. Hierdurch ergibt sich der Vorteil, dass die Wärmeenergie im Schutzgas, welche zu Anfang des Haubenglühprozesses über die Brenner in das Kaltband eingebracht wird, nahezu vollständig zurück gewonnen werden kann, wobei trotz der geringen Drücke im Ölkreislauf ca. 74 % der ursprünglichen Energie in elektrische oder mechanische Energie sowie in direkt nutzbare thermische Energie überführt wird.

Nach einem weiteren der Erfindung zugrunde liegenden Gedanken umfasst der zweite Wärmetauscher in Strömungsrichtung des Arbeitsmediums betrachtet einen Vorerhitzer zum Vorerwärmen des Arbeitsmediums, einen diesem nachgeschalteten Verdampfer zum Verdampfen des Arbeitsmediums sowie bevorzugt auch einen dem Verdampfer nachgeschalteten Überhitzer zum Überhitzen des dampfförmigen Arbeitsmediums. Dabei werden zur Steigerung der Effizienz bei der Wärmerückgewinnung zunächst der Überhitzer, im Anschluss daran der Verdampfer und danach der Vorerhitzer von dem im ersten Wärmetauscher erhitzten Öl des Ölkreislaufs nacheinander durchströmt.

Bei der bevorzugten Ausführungsform der Erfindung ist es weiterhin vorgesehen, dass das Schutzgas während der ersten Langsamkühlphase mit einem im Wesentlichen konstanten Volumenstrom in einem geschlossenen Kreislauf durch den Haubenglühofen und den ersten Wärmetauscher zirkuliert wird, und dass die Temperatur des Schutzgases innerhalb des Haubenglühofens - wie bereits zuvor ausgeführt - auf der Basis der Durchflussmenge an Öl durch den ersten Wärmetauscher verändert wird. Hierdurch ergibt sich eine besonders schnelle und präzise Regelungsmöglichkeit für die Temperatur des Schutzgases innerhalb des Haubenglühofens.

Um die in den erwärmten Kaltband-Coils enthaltene Wärmeenergie mit einem besonders hohen Wirkungsgrad zurück zu gewinnen, ist es weiterhin vorgesehen, dass der Dampfmotor antriebsmäßig mit einem elektrischen Generator gekoppelt ist, der die erzeugte elektrische Energie in einen Stromspeicher und/oder in das öffentliche Stromnetz und/oder in ein eigenes Stromnetz einspeist.

Dabei wird bevorzugt zumindest ein Teil der von Generator erzeugten elektrischen Energie einem dem ersten Wärmetauscher zugeordneten elektrisch angetriebenen Gebläse zur Zirkulation des Schutzgases durch den Innenraum des Haubenglühofens und/oder einer elektrisch betriebenen Pumpeinrichtung zur Zirkulation des Öls innerhalb des geschlossenen Ölkreislaufs durch den ersten und zweiten Wärmetauscher und/oder einer elektrisch betriebenen Pumpe zum Fördern des Arbeitsmediums zugeführt, so dass für deren Betrieb keine zusätzliche elektrische Energie benötigt wird.

Die Erfindung wird nachfolgend anhand einer erfindungsgemäßen Anordnung zur Durchführung des zuvor beschriebenen erfindungsgemäßen Verfahrens anhand von Zeichnungen erläutert.

In den Zeichnungen zeigen:
- Fig. 1: die erfindungsgemäße Anordnung während der Langsamkühlphase
- Fig. 2: die erfindungsgemäße Anordnung während der Schnellkühlphase,
- Fig. 3: einen beispielhaften Verlauf der Temperaturen des Schutzgases sowie des Kerns eines Kaltband-Coils während der Aufheizphase, Langsamkühlphase und der anschließenden Schnellkühlphase in Abhängigkeit von der Zeit, und
- Fig. 4: den bei der besonders bevorzugten Ausführungsform der Erfindung eingesetzten Überhitzer, Verdampfer und Vorwärmer, welche vom Öl nacheinander durchströmt werden.

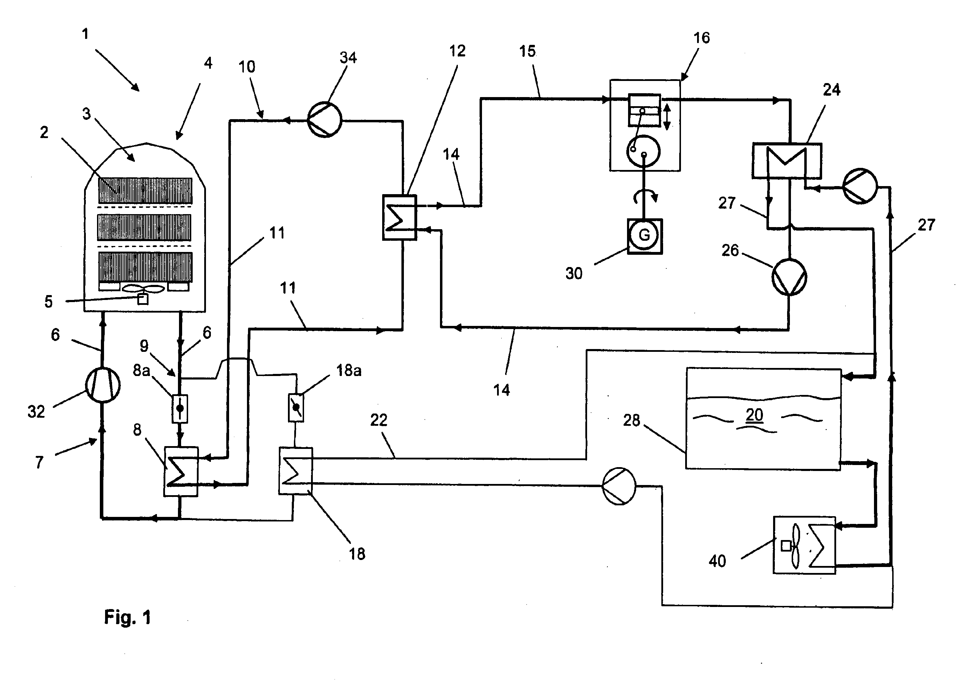

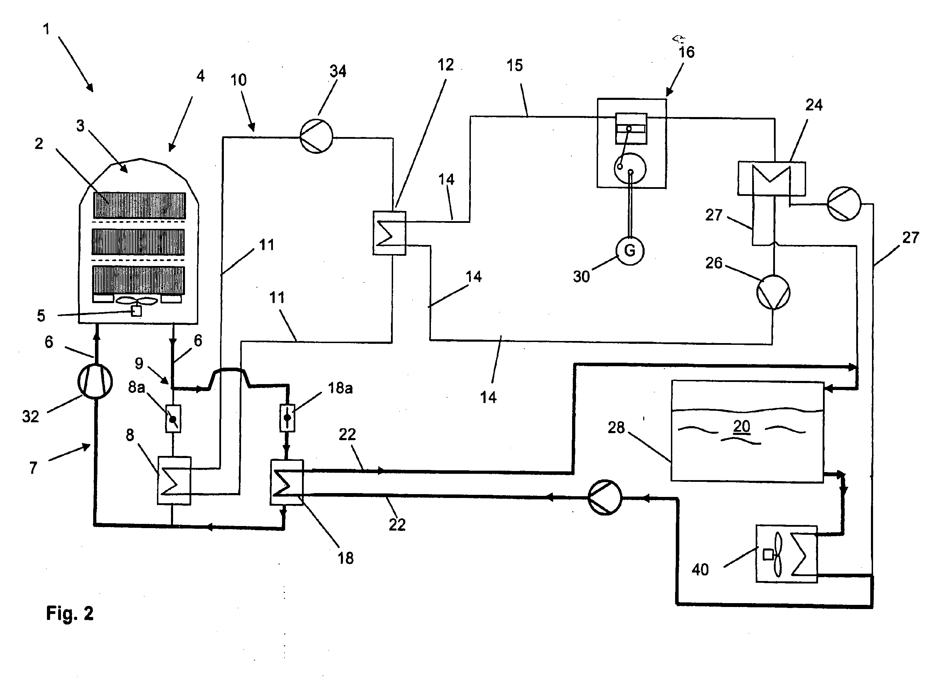

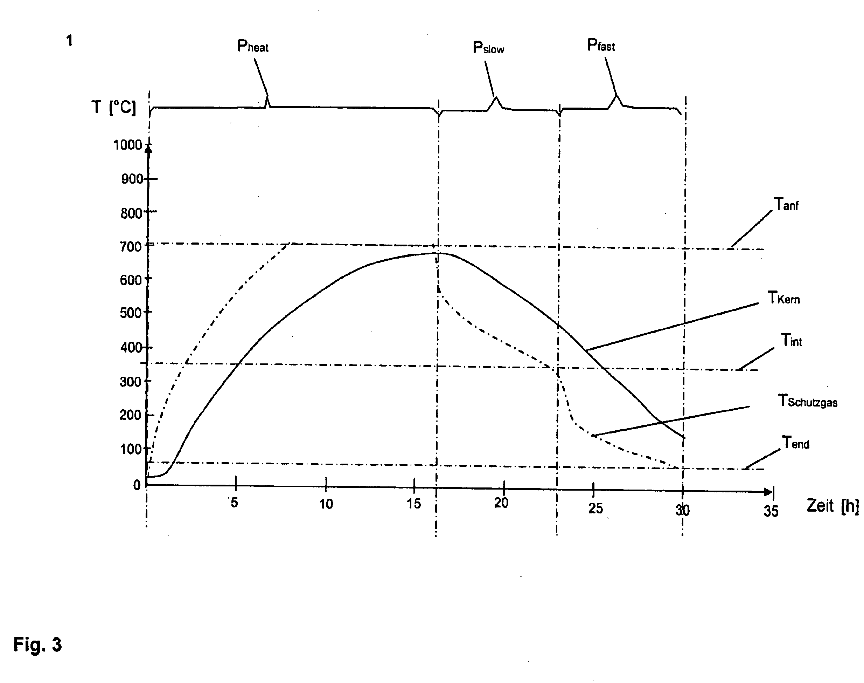

Wie in den Figuren 1 und 2 gezeigt ist, umfasst eine Anordnung 1 zur Rückgewinnung von Wärmeenergie bei der thermischen Behandlung von kaltgewalztem Stahlband 2 einen Haubenglühofen 4, in dem mehrere übereinander angeordnete Coils aus Kaltband in bekannte Weise unter einer nach außen hin luftdicht abgeschlossenen Glühhaube angeordnet werden, um diese nach dem Kaltwalzprozess auf eine Temperatur oberhalb der Rekristallisationstemperatur zu erwärmen. Innerhalb des Haubenglühofens 4, dessen Glühaube in den Zeichnungen der Übersichtlichkeit halber nicht mit dargestellt ist, befindet sich eine Atmosphäre aus Schutzgas 6, welches bevorzugt Wasserstoffgas ist, das über ein in den Figuren angedeutetes Gebläse 5 zwischen den Coils hindurch umgewälzt wird. Während der in Fig. 3 als Pₕₑₐₜ bezeichneten Aufheizphase, die in der Darstellung von Fig. 3 nur beispielhaft wiedergegeben ist, wird das Schutzgas hierzu über nicht näher gezeigte Brenner indirekt erwärmt und solange zirkuliert, bis die gewünschte Temperatur von z.B. 710°C erreicht wurde. Im Anschluss daran wird die Temperatur des Schutzgases gemäß einem in Fig. 3 wiedergegebenen Temperaturverlauf in zwei aufeinanderfolgenden Kühlphasen verringert, von denen die erste Kühlphase als Langsamkühlphase P_{slow} und die zweite Kühlphase als Schnellkühlphase P_{fast} bezeichnet ist.

Um die Temperatur des Kaltbandes im Verlauf der Kühlphasen P_{slow} und P_{fast} entsprechend den gewünschten Temperaturprofilen abzusenken, wird das Schutzgas 6 über ein elektrisch betriebenes Gebläse 32 in einem geschlossenen Schutzgaskreislauf 7 zirkuliert, wobei die Temperatur des Schutzgases im Wesentlichen der mittleren Regeltemperatur entspricht, die das Kaltband 2 annehmen soll. Aufgrund der vergleichsweise großen Wärmekapazität der Kaltband-Coils nimmt dabei die im Diagramm der Fig. 3 mit T_{Kern} bezeichnete, als durchgezogene Linie dargestellte Kerntemperatur der Coils erheblich langsamer ab, als die mit T_{Schutzgas} bezeichnete Temperatur des Wasserstoffgases, die als strichpunktierte Linie wiedergegeben ist.

Gemäß der Darstellung von Fig. 1 wird das Schutzgas 6, welches zum Ende der Aufheizphase Pₕₑₐₜ hin eine anfängliche maximale Temperatur T_{anf} von z.B. 710 °C besitzt, während der ersten Langsamkühlphase P_{slow} ausschließlich über einen ersten Wärmetauscher 8 zirkuliert, dessen kalte Seite über einen geschlossenen Ölkreislauf 10 und eine elektrisch betätigte Pumpe 34 mit einem zweiten Wärmetauscher 12 in Strömungsverbindung steht. Der Ölkreislauf 10 enthält dabei flüssiges Thermoöl, welches im ersten Wärmetauscher 8 durch das Schutzgas 6 auf eine Temperatur im Bereich von 265°C erhitzt und im zweiten Wärmetauscher 12 durch ein Arbeitsmedium 14 auf eine Temperatur im Bereich von 180°C abgekühlt wird.

Bei dem Arbeitsmedium 14 handelt es sich um eine organische Flüssigkeit, insbesondere um Ethanol, welches bei Normaldruck eine Siedetemperatur von weniger als 80°C, insbesondere weniger als 70°C besitzt und im zweiten Wärmetauscher 12 verdampft wird. Das verdampfte Arbeitsmedium 14 wird anschließend über eine Zuleitung 15 unter Druck, bevorzugt im Bereich von 35 bar, einem bekannten Dampfmotor zugeführt, der ähnlich einer Kolbendampfmaschine, bzw. einem modifizierten Hubkolbenmotor oder Luftdruckmotor arbeitet und einen Teil der im dampfförmigen Arbeitsmedium 14 enthaltenen Wärmeenergie in mechanische Arbeit umwandelt, die bevorzugt über eine in Fig. 1 schematisch angedeutete Welle zum Antrieb eines elektrischen Generators 30 verwendet wird. Dem Dampfmotor 16 ist auslassseitig ein Kondensator 24 in Strömungsrichtung des Arbeitsmediums 14 nachgeordnet, der über ein Wärmetransportmedium, bevorzugt Kühlwasser 27, auf eine Temperatur unterhalb des Siedepunkts gekühlt wird, um das dampfförmige Arbeitsmedium 14 in den flüssigen Zustand zu überführen. Das verflüssigte Arbeitsmediums 14 wird stromabwärts des Kondensators 24 über eine elektrische Pumpe 26 erneut dem zweiten Wärmetauscher 12 zugeführt, um das Arbeitsmedium 14 erneut zu verdampfen.

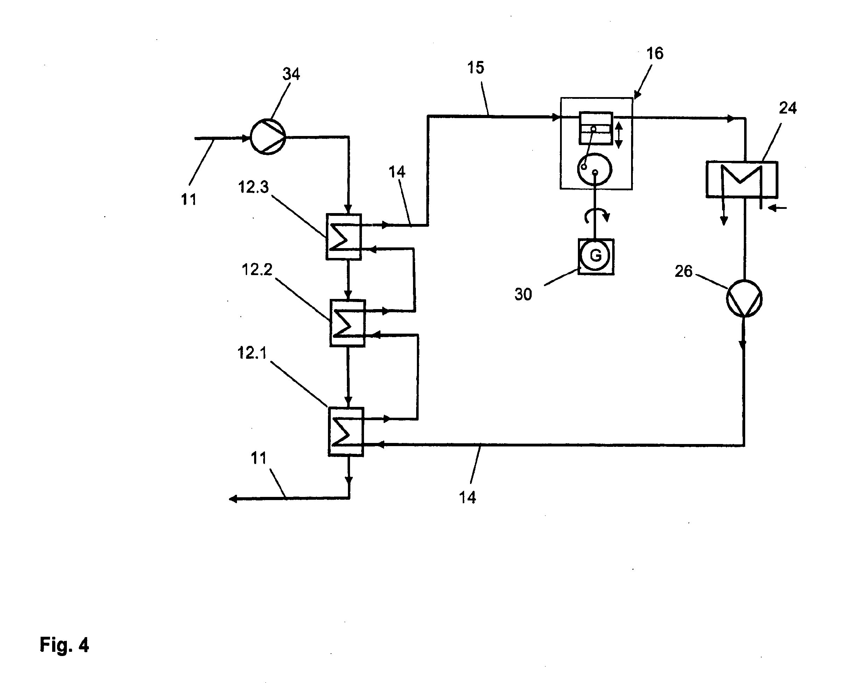

Um dabei den Wirkungsgrad der Energierückgewinnung weiter zu steigern, ist es gemäß der Darstellung von Fig. 4 bei der bevorzugten Ausführungsform der Erfindung vorgesehen, dass der zweite Wärmetauscher 12 in Strömungsrichtung des Arbeitsmediums 14 betrachtet einen Vorerhitzer 12.1 zum Vorerhitzen des Arbeitsmediums 14, einen diesem strömungsmäßig nachgeodneten Verdampfer 12.2 zum Verdampfen des Arbeitsmediums 14 sowie einen dem Verdampfer 12.2 strömungsmäßig nachgeordneten Überhitzer 12.3 umfasst, welch letzter den im Verdampfer erzeugten Arbeitsmittel-Dampf z.B. auf eine Temperatur von bevorzugt ca. 250°C überhitzt, bevor der Dampf dem Dampfmotor 16 zugeführt wird. Dabei werden zunächst der Überhitzer 12.3, im Anschluss daran der Verdampfer 12.2 und schließlich der Vorerhitzer 12.1 nacheinander vom Öl 11 durchströmt, welches beim Eintritt in den Überhitzer 12.3 beispielsweise eine Temperatur im Bereich von 265 °C besitzt, und dort einen Teil seiner Wärmeenergie an das dampfförmige Arbeitsmedium 14 abgibt, bevor es in die Heißseite des Verdampfers 12.2 eintritt, bei dem es sich ebenfalls vom Prinzip her um einen bekannten Wärmetauscher handelt. Nachdem das Öl 11 im Verdampfer 12.2 einen weiteren Teil seiner Wärmeenergie an das Arbeitsmedium 14 abgegeben hat, um dieses zu verdampfen, wird das dadurch weiter abgekühlte und bevorzugt weniger als 70°C warme Öl 11 durch die Heißseite des Vorerhitzers 12.1 geleitet, bei welchem es sich ebenfalls um einen Wärmetauscher handelt, in welchem ein Teil der im Öl 11 verbliebenen Restwärmemenge auf das flüssige Arbeitsmedium 14 übertragen wird, um dieses auf eine Temperatur kurz unterhalb der Siedetemperatur von z.B. 70 °C zu erwärmen.

Wie der Fig. 1, in der die während der erste Langsamkühlphase aktiven Medien-Kreisläufe in fett gedruckten Linien hervorgehoben sind, weiterhin entnommen werden kann, wird das Wärmetransportmedium 27 beispielsweise über einen in den Zeichnungen nicht näher gezeigten weiteren Wärmetauscher in einem exemplarischen Kreislauf einem Heißwasserspeicher 28 zugeführt, um das darin gesammelte Wasser 20 direkt zu erwärmen. Alternativ kann das Wärmetransportmedium 27 jedoch auch aus dem Versorgungsnetz zugeführtes Kaltwasser sein, welches den Kondensator 24 durchströmt, um vorgewärmt in den Heißwasserspeicher 28 einzutreten, aus welchem es anschließend zu Heizzwecken oder als Brauchwasser entnommen werden kann.

Wie in Fig. 2 weiterhin durch die fett gedruckten Linien angedeutet ist, wird beim Erreichen einer Zwischentemperatur Tᵢₙₜ von z.B. 400 °C am Ende der ersten Langsamkühlphase P_{slow} (vergleiche Fig. 2) die Temperatur des Schutzgases 6 in der sich anschließende Schnellkühlphase P_{fast} weiter bis auf die Endtemperatur T_{end} verrignert, die bevorzugt unterhalb von 80°C liegt. Hierzu wird die Zuleitung des ca. 400 °C heißen Schutzgases 6 zum ersten Wärmetauscher 8 durch Schließen des dem Wärmetauscher 8 vorgeschalteten Ventils 8a unterbrochen und das einem weiteren Wärmetauscher 18 vorgeschaltete Ventil 18a geöffnet, woraufhin das Schutzgas 6 über eine stromaufwärts des Ventils 8a an einem Knotenpunkt 9 abzweigende Schutzgasleitung durch einen weiteren Wärmetauscher 18 und von diesem zurück in den Innenraum 3 des Haubenglühofens 4 zurück zirkuliert wird. Im weiteren Wärmetauscher 18, der ausschließlich in der zweiten Schnellkühlphase vom Schutzgas 6 durchströmt wird, wird die im Schutzgas 6 enthaltene Wärmeenergie über ein weiteres Wärmetransportmedium 22, bevorzugt Wasser, einem Heißwasserspeicher zugeführt, welcher bevorzugt der bereits schon zuvor erwähnte Heißwasserspeicher 28 ist, in welchem das Wasser zum Kühlen des Kondensators 24 vorgewärmt wird. Zusätzlich kann ein in Fig. 1 und 2 angedeuteter Zusatzkühler 40, insbesondere in Form eines Feiluftkühlers in die Zuleitung für das Wärmetransportmedium 27 zum Kondensator 24 eingebunden sein, welcher das dem Kondensator zugeführte Wärmetransportmedium kühlt, wenn die Temperatur des Heißwassers 20 im Brauchwasserspeicher 28 zu hoch wird. Der Zusatzkühler 40 kann gemäß einer nicht näher gezeigten Ausführungsform über ein geeignetes Ventil und eine Zuleitung zusätzlich auch mit der Zuleitung zum Brauchwasserspeicher 28 und/oder der Zuleitung zum weitere Wärmetauscher 18 strömungsmäßig verbunden sein, um auch während der in Fig. 2 gezeigten Schnellkühlphase P_{fast} eine Überhitzung des Heißwassers 20 im Brauchwasserspeicher 28 zu verhindern, wenn z.B. im Sommer der Bedarf an heißem Brauchwasser und/oder Heizungswasser gering ist. Ebenso ist eine Kühlung des Heißwassers 20 über einen nicht dargestellten Wärmetauscher in Form einer Leitungsschlange im Brauchwasserspeicher 28 denkbar.

Es versteht sich, dass anstelle des Wassers 20 im Brauchwasserspeicher 28 beispielsweise auch ein Heizmedium, wie z.B. Luft über einen weiteren Wärmetauscher durch das weitere Wärmetransportmedium 22 erwärmt werden kann, um die Restenergie im Schutzgas 6 auch am Ende der Schnellkühlphase P_{fast} noch effektiv zu Heizzwecken nutzen zu können, wenn das Schutzgas 6 lediglich noch eine Temperatur im Bereich der Endtemperatur T_{end} aufweist.

Durch den Einsatz der erfindungsgemäßen Anordnung 1 wird es ermöglicht, die im Schutzgas 6 enthaltene Wärmeenergie trotz der vergleichsweise großen Temperaturspannen während der Langsam- und Schnellkühphasen sehr effektiv zu nutzen.

Die Regelung der Durchflussmengen an Öl, Arbeitsmedium 14 und Wasser in den jeweiligen Kreisläufen erfolge dabei über eine in den Zeichnungen nicht näher gezeigte elektronische Steuerungseinrichtung und entsprechende Sensoren.

### Liste der Bezugszeichen

- 1: erfindungsgemäße Anordnung
- 2: Kaltband
- 3: Innenraum des Haubenglühofens
- 4: Haubenglühofen
- 5: Gebläse
- 6: Schutzgas
- 7: geschlossener Schutzgaskreislauf
- 8: erster Wärmetauscher
- 8a: Ventil
- 9: Kontenpunkt
- 10: geschlossener Ölkreislauf
- 11: Öl
- 12: zweiter Wärmetauscher
- 12.1: Vorerhitzer
- 12.2: Verdampfer
- 12.3: Überhitzer
- 14: Arbeitsmedium/Ethanol
- 15: Zuleitung
- 16: Dampfmotor
- 18: weiterer Wärmetauscher
- 18a: Ventil
- 20: Heißwasser
- 22: weiteres Wärmetransportmedium
- 24: Kondensator
- 26: Pumpe für kondensiertes Arbeitsmedium
- 27: drittes Wärmetransportmedium
- 28: Brauchwasserspeicher
- 30: elektrischer Generator
- 32: elektrisches Gebläse
- 34: elektrisch angetriebene Pumpe für Öl
- 40: Zusatzkühler
- P_{low}: Langsamkühlphase
- P_{fast}: Schnellkühlphase
- T_{anf}: Anfangstemperatur des Schutzgases
- Tᵢₙₜ: Zwischentemperatur
- T_{end}: Endtemperatur

## Patentansprüche

1. Verfahren zur Rückgewinnung von Wärmeenergie bei der thermischen Behandlung von kaltgewalztem Stahlband (2) in einem Haubenglühofen (4), in dem das Stahlband (2) in einer Schutzgasatmosphäre bis auf eine Temperatur oberhalb der Rekristallisationstemperatur erwärmt, in einer sich anschließenden ersten Langsamkühlphase und in einer sich an die erste Langsamkühlphase (P_{slow}) anschließenden zweiten Schnellkühlphase (P_{fast}) mit Schutzgas (6) beaufschlagt wird, dessen Temperatur im Verlauf der ersten Phase (P_{slow}) bis auf eine Zwischentemperatur (Tᵢₙₜ) von insbesondere 400°C und in der zweiten Phase von der Zwischentemperatur auf eine Endtemperatur (T_{end}) von insbesondere weniger als 80°C verringert wird,
**dadurch gekennzeichnet,**
**dass** ein erster, vom Schutzgas (6) ausschließlich in der ersten Phase (P_{slow}) durchströmter Wärmetauscher (8) vorgesehen ist, der die Wärmeenergie des Schutzgases (6) über einen geschlossenen Ölkreislauf (10) und einen zweiten Wärmetauscher (12; 12.1, 12.2, 12.3) auf ein Arbeitsmedium (14) überträgt, welches bei Normaldruck eine Siedetemperatur von weniger als 80°C, insbesondere weniger als 70°C besitzt, und welches im zweiten Wärmetauscher (12; 12.1, 12.2, 12.3) verdampft und einem Dampfmotor (16) zugeführt wird, der einen Teil der im Arbeitsmedium (14) enthaltenen Wärmeenergie in mechanische und/oder elektrische Energie überführt, und dass ein weiter Wärmetauscher (18) vorgesehen ist, der ausschließlich in der zweiten Schnellkühlphase (P_{fast}) vom Schutzgas (6) durchströmt wird, und in welchem die im Schutzgas (6) enthaltene Wärmeenergie zur Erwärmung von Brauchwasser (20) auf ein weiteres Wärmetransportmedium (22), bevorzugt Wasser, übertragen wird.

2. Verfahren nach Anspruch 1,
**dadurch gekennzeichnet,**
**dass** der Ölkreislauf (10) Thermoöl (11) enthält, welches im ersten Wärmetauscher (8) durch das Schutzgas (6) auf eine Temperatur im Bereich von 265°C erhitzt und im zweiten Wärmetauscher (12) durch das Arbeitsmedium (14) auf eine Temperatur im Bereich von 180°C abgekühlt wird.

3. Verfahren nach Anspruch 1 oder 2,
**dadurch gekennzeichnet,**
**dass** das Arbeitsmedium (14) eine organische Flüssigkeit ist, insbesondere Ethanol, welche im zweiten Wärmetauscher (12; 12.1, 12.2, 12.3) verdampft wird, und dass dem Dampfmotor (16) ein Kondensator (24) und eine Pumpe (26) nachgeschaltet sind, über die das Arbeitsmedium (14) nach dem Verlassen des Dampfmotors (16) kondensiert und erneut zum zweiten Wärmetauscher (12; 12.1, 12.2, 12.3) gefördert wird.

4. Verfahren nach Anspruch 3,
**dadurch gekennzeichnet,**
**dass** der Kondensator (24) von einem Wärmetransportmedium (27), insbesondere Wasser, gekühlt wird, welches die dem Arbeitsmedium (14) entzogene Restwärme zur Erwärmung von Brauchwasser (20) oder zu Heizzwecken einem Heißwasserspeicher (28) und/oder einer Heizeinrichtung zuführt.

5. Verfahren nach einem der vorhergehenden Ansprüche,
**dadurch gekennzeichnet,**
**dass** der zweite Wärmetauscher in Strömungsrichtung des Arbeitsmediums (14) betrachtet einen Vorerhitzer (12.1) zum Vorerwärmen des Arbeitsmediums (14), einen diesem nachgeschalteten Verdampfer (12.2) zum Verdampfen des Arbeitsmediums (14) sowie einen dem Verdampfer (12.2) nachgeschalteten Überhitzer (12.3) zum Überhitzen des dampfförmigen Arbeitsmdiums (14) umfasst, wobei zunächst der Überhitzer (12.3), im Anschluss daran der Verdampfer (12.2) und danach der Vorerhitzer (12.1) nacheinander von dem im ersten Wärmetauscher (8) erhitzten Öl (11) des Ölkreislaufs (10) durchströmt werden.

6. Verfahren nach einem der vorhergehenden Ansprüche,
**dadurch gekennzeichnet,**
**dass** das Schutzgas (6) während der ersten Langsamkühlphase (P_{slow}) mit einem im Wesentlichen konstanten Volumenstrom in einem geschlossenen Kreislauf (7) durch den Haubenglühofen (4) und den ersten Wärmetauscher (8) zirkuliert wird, und dass die Temperatur des Schutzgases (6) innerhalb des Haubenglühofens (4) auf der Basis der Durchflussmenge an Öl (11) durch den ersten Wärmetauscher (8) verändert wird.

7. Verfahren nach einem der vorhergehenden Ansprüche,
**dadurch gekennzeichnet,**
**dass** der Dampfmotor (16) antriebsmäßig mit einem elektrischen Generator (30) gekoppelt ist, der die erzeugte elektrische Energie in einen Stromspeicher und/oder in das öffentliche Stromnetz und/oder in ein eigenes Stromnetz einspeist.

8. Verfahren nach Anspruch 7,
**dadurch gekennzeichnet,**
**dass** der elektrische Generator (30) einen Teil der von ihm erzeugten elektrischen Energie einem dem ersten Wärmetauscher (8) zugeordneten elektrisch angetriebenen Gebläse (32) zur Zirkulation des Schutzgases (6) durch den Innenraum (3) des Haubenglühofens (4) und/oder einer elektrisch betriebenen Pumpeinrichtung (34) zur Zirkulation des Öls (11) durch den ersten und zweiten Wärmetauscher (8, 12) und/oder einer elektrisch betriebenen Pumpe (26) zum Fördern des Arbeitsmediums (14) zuführt.

9. Anordnung zur Rückgewinnung von Wärmeenergie bei der thermischen Behandlung von kaltgewalztem Stahlband (2), zur Durchführung des Verfahrens nach einem der vorhergehenden Ansprüche, umfassend einen Haubenglühofen (4), in dem das Stahlband (2) in einer Schutzgasatmosphähre bis auf eine Temperatur oberhalb der Rekristallisationstemperatur erwärmt, und in einer sich anschließenden ersten Langsamkühlphase (P_{slow}) sowie einer sich an die erste Langsamkühlphase (P_{slow}) anschließenden zweiten Schnellkühlphase (P_{fast}) mit Schutzgas (6) beaufschlagt wird, dessen Temperatur im Verlauf der ersten Phase bis auf eine Zwischentemperatur (Tᵢₙₜ) von insbesondere 400°C und in der zweiten Phase (P_{fast}) von der Zwischentemperatur (Tᵢₙₜ) auf eine Endtemperatur (T_{end}) von insbesondere weniger als 80°C verringert wird, **gekennzeichnet durch**
einen ersten, vom Schutzgas (6) ausschließlich in der ersten Phase durchströmten Wärmetauscher (8), einen zweiten Wärmetauscher (12; 12.1, 12.2, 12.3) der mit dem ersten Wärmetauscher (8) über einen geschlossenen Ölkreislauf (10) verbunden ist, und einen Dampfmotor (16), dem über eine Zuleitung (15) ein im zweiten Wärmetauscher (12; 12.1, 12.2, 12.3) erhitztes Arbeitsmedium (14), welches bei Normaldruck eine Siedetemperatur von weniger als 80°C, insbesondere weniger als 70°C besitzt, in Form von Dampf zugeführt wird, und der einen Teil der im Arbeitsmedium (14) enthaltenen Wärmeenergie in mechanische und/oder elektrische Energie überführt, sowie einen weiteren Wärmetauscher (18), der ausschließlich in der zweiten Schnellkühlphase vom Schutzgas (6) durchströmt wird, und in dem die im Schutzgas (6) enthaltene Wärmeenergie zur Erwärmung von Brauchwasser (20) auf ein weiteres Wärmetransportmedium (22), bevorzugt Wasser, übertragen wird.

10. Anordnung nach Anspruch 9,
**dadurch gekennzeichnet,**
**dass** das Arbeitsmedium (14) eine organische Flüssigkeit, insbesondere Ethanol ist, und dass dem Dampfmotor (16) ein Kondensator (24) und eine Pumpe (26) nachgeschaltet sind, über die das Arbeitsmedium (14) vor der erneuten Zufuhr zum zweiten Wärmetauscher (12; 12.1, 12.2, 12.3) kondensiert wird.

11. Anordnung nach einem der Ansprüche 9 oder 10,
**dadurch gekennzeichnet,**
**dass** der zweite Wärmetauscher in Strömungsrichtung des Arbeitsmediums betrachtet einen Vorerhitzer (12.1) zum Vorerwärmen des Arbeitsmediums (14), einen diesem nachgeschalteten Verdampfer (12.2) zum Verdampfen des Arbeitsmediums (14) sowie einen dem Verdampfer (12.2) nachgeschalteten Überhitzer (12.3) zum Überhitzen des dampfförmigen Arbeitsmdiums (14) umfasst, wobei zunächst der Überhitzer (12.3), im Anschluss daran der Verdampfer (12.2) und danach der Vorerhitzer (12.1) nacheinander von dem im ersten Wärmetauscher (8) erhitzten Öl (11) des Ölkreislaufs (10) durchströmt werden.

## Claims

1. Method for recovering thermal energy in the heat treatment of cold-rolled steel strip (2) in a bell-type annealing furnace (4), in which the steel strip (2) is heated in an inert gas atmosphere up to a temperature above the recrystallisation temperature, being subjected in a subsequent first, slow cooling phase and in a second, fast cooling phase (P_{fast}), following the first, slow cooling phase (P_{slow}), to an inert gas (6) whose temperature is reduced in the course of the first phase (P_{slow}) down to an intermediate temperature (Tᵢₙₜ) of in particular 400°C and in the second phase from the intermediate temperature to a final temperature (T_{end}) of in particular less than 80°C,
**characterised in that**
a first heat exchanger (8) is provided through which the inert gas (6) is flowing exclusively in the first phase (P_{slow}), wherein the first heat exchanger transfers the thermal energy of the inert gas (6) by way of a closed oil circuit (10) and a second heat exchanger (12; 12.1; 12.2; 12.3) to a working medium (14), whose boiling temperature under standard pressure is less than 80°C, in particular less than 70°C, and which evaporates in the second heat exchanger (12; 12.1; 12.2; 12.3) and is fed to a steam engine (16), which converts a part of the thermal energy contained in the working medium (14) into mechanical and/or electrical energy, and that a further heat exchanger (18) is provided through which the inert gas (6) flows exclusively in the second, fast cooling phase (P_{fast}) and in which the thermal energy contained in the inert gas (6) is transferred to a further heat transfer medium (22), preferably water, for heating up service water (20).

2. Method according to claim 1,
**characterised in that**
the oil circuit (10) contains thermal oil (11) which is heated up in the first heat exchanger (8) by the inert gas (6) to a temperature in the range of 265°C and cooled down in the second heat exchanger (12) by the working medium (14) to a temperature in the range of 180°C.

3. Method according to claim 1 or 2,
**characterised in that**
the working medium (14) is an organic fluid, in particular ethanol, which is evaporated in the second heat exchanger (12; 12.1; 12.2; 12.3), and that a condenser (24) and a pump (26) are connected in series with the steam engine (16) downstream, by way of which the working medium (14) is condensed after leaving the steam engine (16) and is transported once again to the second heat exchanger (12; 12.1; 12.2; 12.3).

4. Method according to claim 3,
**characterised in that**
the condenser (24) is cooled by a heat transfer medium (27), in particular water, which feeds the residual heat extracted from the working medium (14) to heat service water (20) or to heat up a hot-water storage unit (28) and/or a heating device.

5. Method according to one of the preceding claims,
**characterised in that,**
when viewed in the direction of flow of the working medium (14), the second heat exchanger comprises a preheater (12.1) for preheating the working medium (14), an evaporator (12.2) connected in series downstream of the preheater for evaporating the working medium (14) and also a superheater (12.3) connected in series downstream of the evaporator (12.2) for superheating the vaporous working medium (14), wherein the oil (11) in the oil circuit (10) heated in the first heat exchanger (8) flows first through the superheater (12.3), then through the evaporator (12.2) and after that through the preheater (12.1) one after the other.

6. Method according to one of the preceding claims,
**characterised in that,**
during the first, slow cooling phase (P_{slow}), the inert gas (6) is circulated with a substantially constant volumetric flow in a closed circuit (7) through the bell-type annealing furnace (4) and the first heat exchanger (8), and that the temperature of the inert gas (6) is changed inside the bell-type annealing furnace (4) based on the flow rate of oil (11) through the first heat exchanger (8).

7. Method according to one of the preceding claims,
**characterised in that**
the steam engine (16) is coupled to an electrical generator (30) by means of a drive wherein said generator feeds the generated electrical energy into a power storage unit, and/or the public power grid and/or a private power grid.

8. Method according to claim 7,
**characterised in that**
the electrical generator (30) feeds a part of the electrical energy it generates to an electrically driven fan (32), associated with the first heat exchanger (8), for circulating the inert gas (6) through the interior space (3) of the bell-type annealing furnace (4) and/or to an electrically operated pumping device (34) for circulating the oil (11) through the first and second heat exchangers (8, 12) and/or to an electrically operated pump (26) for transporting the working medium (14).

9. Arrangement for recovering thermal energy in the heat treatment of cold-rolled steel strip (2), for carrying out the method according one of the preceding claims, comprising a bell-type annealing furnace (4), in which the steel strip (2) is heated in an inert gas atmosphere up to a temperature above the recrystallisation temperature, being subjected in a subsequent first, slow cooling phase (P_{slow}) and in a second, fast cooling phase (P_{fast}), following the first, slow cooling phase (P_{slow}), to an inert gas (6) whose temperature is reduced in the course of the first phase down to an intermediate temperature (Tᵢₙₜ) of in particular 400°C and in the second phase (P_{fast}) from the intermediate temperature (Tᵢₙₜ) to a final temperature (T_{end}) of in particular less than 80°C,
**characterised by**
a first heat exchanger (8) through which the inert gas (6) is flowing exclusively in the first phase, a second heat exchanger (12; 12.1; 12.2; 12.3) connected to the first heat exchanger (8) by way of a closed oil circuit (10), and a steam engine (16) to which a working medium (14), heated in the second heat exchanger (12; 12.1; 12.2; 12.3) and whose boiling temperature under standard pressure is less than 80°C, in particular less than 70°C, is transferred in the form of steam by means of a feed line (15), said steam engine converting a part of the thermal energy contained in the working medium (14) into mechanical and/or electrical energy, and a further heat exchanger (18) through which the inert gas (6) flows exclusively in the second cooling phase and in which the thermal energy contained in the inert gas (6) is transferred to a further heat transfer medium (22), preferably water, for heating up service water (20).

10. Arrangement in accordance with claim 9,
**characterised in that**
the working medium (14) is an organic fluid, in particular ethanol, and that a condenser (24) and a pump (26) are connected in series with the steam engine (16) downstream, by way of which the working medium (14) is condensed before being transported once again to the second heat exchanger (12; 12.1; 12.2; 12.3).

11. Arrangement in accordance with one of claims 9 or 10,
**characterised in that**
when viewed in the direction of flow of the working medium, the second heat exchanger comprises a preheater (12.1) for preheating the working medium (14), an evaporator (12.2) connected in series downstream of the preheater for evaporating the working medium (14) and also a superheater (12.3) connected in series downstream of the evaporator (12.2) for superheating the vaporous working medium (14), wherein the oil (11) in the oil circuit (10) heated in the first heat exchanger (8) flows first through the superheater (12.3), then through the evaporator (12.2) and after that through the preheater (12.1) one after the other.

## Revendications

1. Procédé pour récupérer de l'énergie thermique lors du traitement thermique d'une bande en acier enroulée à froid (2) dans un four de recuit à cloche (4), dans lequel la bande en acier (2) se réchauffe dans une atmosphère de gaz protecteur jusqu'à une température supérieure à la température de recristallisation, est alimentée en gaz protecteur (6) lors d'une première phase de refroidissement lent consécutive et lors d'une deuxième phase de refroidissement rapide (P_{fast}) consécutive à la première phase de refroidissement lent (P_{slow}), dont la température au cours de la première phase (P_{slow}) baisse jusqu'à une température intermédiaire (Tᵢₙₜ) de 400°C en particulier et lors de la deuxième phase baisse de la température intermédiaire jusqu'à une température finale (T_{end}) de moins de 80°C en particulier,
**caractérisé en ce**
**qu'**un premier échangeur thermique (8) traversé par le gaz protecteur (6) exclusivement lors de la première phase (P_{slow}) est prévu, qui transfère l'énergie thermique du gaz protecteur (6) via un circuit d'huile fermé (10) et un deuxième échangeur thermique (12 ; 12.1, 12.2, 12.3) à un fluide moteur (14), lequel possède à la pression normale une température d'ébullition inférieure à 80°C, en particulier inférieure à 70°C, et qui est évaporé dans le deuxième échangeur thermique (12 ; 12.1, 12.2, 12.3) et amené à un moteur à vapeur (16), qui transforme une partie de l'énergie thermique contenue dans le fluide moteur (14) en énergie mécanique et/ou électrique, et en ce qu'un échangeur thermique supplémentaire (18) est prévu, qui est traversé par le gaz protecteur (6) exclusivement lors de la deuxième phase de refroidissement rapide (P_{fast}), et dans lequel l'énergie thermique contenue dans le gaz protecteur (6) est transférée à un fluide de transport thermique supplémentaire (22), de préférence de l'eau, pour le réchauffement de l'eau industrielle (20).

2. Procédé selon la revendication 1,
**caractérisé en ce**
**que** le circuit d'huile (10) contient de l'huile thermique (11), qui est chauffée dans le premier échangeur thermique (8) par le biais du gaz protecteur (6) jusqu'à une température dans la plage de 265°C et refroidie dans le deuxième échangeur thermique (12) par le biais du fluide moteur (14) jusqu'à une température dans la plage de 180°C.

3. Procédé selon la revendication 1 ou 2,
**caractérisé en ce**
**que** le fluide moteur (14) est un liquide organique, en particulier de l'éthanol, qui est évaporé dans le deuxième échangeur thermique (12 ; 12.1, 12.2, 12.3), et en ce qu'un condensateur (24) et une pompe (26) sont installés en aval du moteur à vapeur (16), via lesquels le fluide moteur (14) est condensé après avoir quitté le moteur à vapeur (16) et de nouveau transféré au deuxième échangeur thermique (12 ; 12.1, 12.2, 12.3).

4. Procédé selon la revendication 3,
**caractérisé en ce**
**que** le condensateur (24) est refroidi par un fluide de transport thermique (27), en particulier de l'eau, qui amène la chaleur résiduelle extraite du fluide moteur (14) pour le réchauffage de l'eau industrielle (20) ou à des fins de chauffage à un réservoir d'eau chaude (28) et/ou à un dispositif de chauffage.

5. Procédé selon l'une des revendications précédentes,
**caractérisé en ce**
**que** le deuxième échangeur thermique vu dans la direction d'écoulement du fluide moteur (14) comprend un préchauffeur (12.1) pour préchauffer le fluide moteur (14), un évaporateur (12.2) installé en aval de celui-ci pour évaporer le fluide moteur (14) ainsi qu'un surchauffeur (12.3) installé en aval de l'évaporateur (12.2) pour surchauffer le fluide moteur sous forme de vapeur (14), dans lequel tout d'abord le surchauffeur (12.3), puis l'évaporateur (12.2) et ensuite le préchauffeur (12.1) sont traversés l'un après l'autre par l'huile (11) du circuit d'huile (10) chauffée dans le premier échangeur thermique (8).

6. Procédé selon l'une des revendications précédentes,
**caractérisé en ce**
**que** le gaz protecteur (6) pendant la première phase de refroidissement lent (P_{slow}) est mis en circulation avec un débit volumétrique sensiblement constant dans un circuit fermé (7) à travers le four de recuit à cloche (4) et le premier échangeur thermique (8), et en ce que la température du gaz protecteur (6) à l'intérieur du four de recuit à cloche (4) varie sur la base du débit de passage de l'huile (11) à travers le premier échangeur thermique (8).

7. Procédé selon l'une des revendications précédentes,
**caractérisé en ce**
**que** le moteur à vapeur (16) est couplé de manière opérationnelle à un générateur électrique (30), qui fournit l'énergie électrique générée à un accumulateur et/ou au réseau électrique public et/ou à son propre réseau électrique.

8. Procédé selon la revendication 7,
**caractérisé en ce**
**que** le générateur électrique (30) amène une partie de l'énergie électrique qu'il a générée à une première soufflante (32) entraînée électriquement associée au premier échangeur thermique (6) pour la circulation du gaz protecteur (6) à travers l'espace interne (3) du four de recuit à cloche (4) et/ou à un dispositif de pompage opéré électriquement (34) pour la circulation de l'huile (11) à travers le premier et le deuxième échangeur thermique (8, 12) et/ou à une pompe opérée électriquement (26) pour refouler le fluide moteur (14).

9. Agencement pour récupérer de l'énergie thermique lors du traitement thermique d'une bande en acier enroulée à froid (2), pour exécuter le procédé selon l'une des revendications précédentes, comprenant un four de recuit à cloche (4), dans lequel la bande en acier (2) se réchauffe dans une atmosphère de gaz protecteur jusqu'à une température supérieure à la température de recristallisation, est alimentée en gaz protecteur (6) lors d'une première phase de refroidissement lent (P_{slow}) consécutive ainsi que lors d'une deuxième phase de refroidissement rapide (P_{fast}) consécutive à la première phase de refroidissement lent (P_{slow}), dont la température au cours de la première phase baisse jusqu'à une température intermédiaire (Tᵢₙₜ) de 400°C en particulier et lors de la deuxième phase (P_{fast}) baisse de la température intermédiaire (Tᵢₙₜ) jusqu'à une température finale (T_{end}) de moins de 80°C en particulier,
**caractérisé par**
un premier échangeur thermique (8) traversé par le gaz protecteur (6) exclusivement lors de la première phase, un deuxième échangeur thermique (12 ; 12.1, 12.2, 12.3) qui est raccordé au premier échangeur thermique (8) via un circuit d'huile fermé (10), et un moteur à vapeur (16), auquel est amené sous forme de vapeur via une arrivée (15) un fluide moteur (14) chauffé dans le deuxième échangeur thermique (12 ; 12.1, 12.2, 12.3), lequel fluide possède à la pression normale une température d'ébullition inférieure à 80°C, en particulier inférieure à 70°C, et qui transforme une partie de l'énergie thermique contenue dans le fluide moteur (14) en énergie mécanique et/ou électrique, ainsi qu'un échangeur thermique supplémentaire (18), qui est traversé par le gaz protecteur (6) exclusivement lors de la deuxième phase de refroidissement rapide, et dans lequel l'énergie thermique contenue dans le gaz protecteur (6) est transférée à un fluide de transport thermique supplémentaire (22), de préférence de l'eau, pour le réchauffement de l'eau industrielle (20).

10. Agencement selon la revendication 9,
**caractérisé en ce**
**que** le fluide moteur (14) est un liquide organique, en particulier de l'éthanol, et en ce qu'un condensateur (24) et une pompe (26) sont installés en aval du moteur à vapeur (16), via lesquels le fluide moteur (14) est condensé avant d'être de nouveau amené au deuxième échangeur thermique (12 ; 12.1, 12.2, 12.3).

11. Agencement selon l'une des revendications 9 ou 10,
**caractérisé en ce**
**que** le deuxième échangeur thermique vu dans la direction d'écoulement du fluide moteur comprend un préchauffeur (12.1) pour préchauffer le fluide moteur (14), un évaporateur (12.2) installé en aval de celui-ci pour évaporer le fluide moteur (14) ainsi qu'un surchauffeur (12.3) installé en aval de l'évaporateur (12.2) pour surchauffer le fluide moteur (14) sous forme de vapeur, dans lequel tout d'abord le surchauffeur (12.3), puis l'évaporateur (12.2) et ensuite le préchauffeur (12.1) sont traversés l'un après l'autre par l'huile (11) du circuit d'huile (10) chauffée dans le premier échangeur thermique (8).
